# EUROPEAN PATENT APPLICATION

(11) **EP 4 576 604 A1**
(43) Date of publication of application: **25.06.2025**
(21) Application number: 23870495.1
(22) Date of filing: 19.09.2023
(51) Int. Cl.: H04B 10/07

(54) **SPECTRUM MEASUREMENT DEVICE, SPECTRUM MEASUREMENT METHOD AND RELATED DEVICE**

(30) Priority: 30.09.2022 CN 202211217578
(71) Applicant: Huawei Technologies Co., Ltd., Shenzhen, Guangdong 518129 (CN)
(72) Inventor: ZOU, Han, Shenzhen, Guangdong 518129 (CN); CHEN, Jie, Shenzhen, Guangdong 518129 (CN); AI, Fan, Shenzhen, Guangdong 518129 (CN)
(74) Representative: Maiwald GmbH
(86) International application number: PCT/CN2023/119820
(87) International publication number: WO 2024/067263

(57) **Abstract**

A spectrum detection device (3000), a spectrum detection method, and a related device are disclosed, to improve accuracy of spectrum detection. The spectrum detection device (3000) includes: a light source (3100), configured to emit reference light; an etalon (3200), configured to output frequency-related information of the reference light based on the input reference light, where the reference light and the frequency-related information correspond to each other; a receiving unit (3300), configured to obtain a beat frequency electrical signal between the reference light and signal light, where the beat frequency electrical signal is for obtaining an initial spectrum of the signal light; and a calculation unit, configured to perform frequency offset correction on the initial spectrum based on the frequency-related information, to obtain a target spectrum of the signal light.

## Description

### TECHNICAL FIELD

Embodiments of this application relate to the field of optical communication, and in particular, to a spectrum detection device, a spectrum detection method, and a related device.

### BACKGROUND

In the field of optical communication and the like, information such as a frequency and power of a signal transmitted in an optical communication system is determined by detecting a spectrum of signal light. A common manner is a coherent spectrum detection technology.

In this technology, reference light is added to a receive end of the signal light, and a spectrum of the signal light is determined based on a beat frequency signal between the reference light and the signal light, and frequency information (namely, wavelength information) of the reference light.

However, because a frequency of a light source providing the reference light is not necessarily accurate, the finally determined spectrum is inaccurate.

### SUMMARY

Embodiments of this application provide a spectrum detection device, a spectrum detection method, and a related device, to improve accuracy of spectrum detection.

According to a first aspect, an embodiment of this application provides a spectrum detection device. The spectrum detection device includes a light source, an etalon, a receiving unit, and a correction unit. The light source is configured to emit reference light. The reference light can be transmitted to the etalon and the receiving unit. The etalon is configured to output frequency-related information of the reference light based on the input reference light. There is a correspondence between the reference light and the frequency-related information, in other words, the reference light and the frequency-related information correspond to each other. The receiving unit is configured to obtain a beat frequency electrical signal between the reference light and signal light, where the beat frequency electrical signal is for obtaining an initial spectrum of the signal light. The correction unit configured to perform frequency offset correction on the initial spectrum based on the frequency-related information, to obtain a target spectrum of the signal light.

In embodiments of this application, the frequency-related information of the reference light is obtained via the etalon. Because the frequency-related information may reflect an actual frequency of the reference light, the frequency offset correction is performed on the initial spectrum based on the frequency-related information, so that the corrected target spectrum can be accurate.

In embodiments of this application, a requirement on the light source of the reference light can be further reduced when spectrum accuracy is ensured. Even if a frequency of the reference light output by the light source is not the same as a predetermined frequency, the frequency offset correction may be performed on the spectrum based on the frequency-related information output by the etalon. Therefore, a precision requirement on the frequency of the reference light output by the light source can be reduced, and usage of a feedback structure on the light source, a high-precision light source, or the like is avoided. Therefore, structural complexity, design and manufacturing difficulty, and costs of the light source can be reduced, and design and manufacturing difficulty and costs of the entire spectrum detection device can be reduced.

In an optional implementation, the frequency-related information includes at least one of the following: output optical power of the etalon; a transmittance output by the etalon; a reflectivity output by the etalon; transmitted optical power of the etalon; or reflected optical power of the etalon.

In embodiments of this application, because there is an inherent correspondence between the frequency-related information (namely, the transmittance, the reflectivity, the transmitted optical power, or the reflected optical power) output by the etalon and a frequency of the light input to the etalon, reliability of the correspondence is high, and accuracy of an actual frequency, of the reference light, determined based on the correspondence is high. Accuracy of a target spectrum obtained by performing frequency offset correction based on the actual frequency is high.

In an optional implementation, the etalon includes at least one of the following: a Fabry-Perot F-P cavity, a grating, an optical thin film, a resonant cavity, and an interferometer.

In an optional implementation, the correction unit is specifically configured to determine a frequency of the reference light based on a correspondence between an input and an output that are of the etalon and the frequency-related information of the reference light. The correspondence is a correspondence between an optical frequency of an optical signal input into the etalon and frequency-related information output from the etalon.

In embodiments of this application, the actual frequency of the reference light is determined based on the correspondence between the input and the output that are of the etalon, to perform frequency offset correction. Because the correspondence is an inherent attribute of the etalon, the correspondence does not change or changes slightly due to a change of an environment, use time, or the like. Therefore, the reliability of the correspondence is high, and the accuracy of the actual frequency, of the reference light, determined based on the correspondence is high. The accuracy of the target spectrum obtained by performing frequency offset correction based on the actual frequency is high.

In an optional implementation, the correspondence includes a correspondence table or a correspondence function.

In an optional implementation, the correction unit is specifically configured to: control the light source to send reference light of different frequencies in different time periods; obtain outputs of the etalon in the different time periods, where the reference light and an etalon output in a same time period correspond to each other; and perform frequency offset correction on the initial spectrum based on the reference light and the etalon outputs that correspond to each other.

In an optional implementation, the correction unit is specifically configured to: perform frequency offset correction on the initial spectrum based on the frequency-related information, to obtain a first spectrum of the signal light; determine equal-interval frequency distribution of the first spectrum; and calculate, based on the first spectrum, a light intensity corresponding to each frequency in the equal-interval frequency distribution, to obtain the target spectrum.

In embodiments of this application, the target spectrum with equal-interval distribution is obtained through calculation, and a universal equal-interval spectrum may be output without a need of conversion. This facilitates subsequent use.

According to a second aspect, an embodiment of this application provides a spectrum detection method, where the method includes: emitting reference light; obtaining frequency-related information of the reference light, where the frequency-related information is obtained by inputting the reference light into an etalon, and the reference light and the frequency-related information correspond to each other; obtaining a beat frequency electrical signal between the reference light and the signal light, where the beat frequency electrical signal is for obtaining an initial spectrum of the signal light; and performing frequency offset correction on the initial spectrum based on the frequency-related information, to obtain a target spectrum of the signal light.

In an optional implementation, the frequency-related information includes at least one of the following: output optical power of the etalon; a transmittance output by the etalon; a reflectivity output by the etalon; transmitted optical power of the etalon; or reflected optical power of the etalon.

In an optional implementation, the etalon includes at least one of the following: a Fabry-Perot F-P cavity, a grating, an optical thin film, a resonant cavity, and an interferometer.

In an optional implementation, an action of performing frequency offset correction on the initial spectrum based on the frequency-related information may specifically include: determining a frequency of the reference light based on a correspondence between an input and an output that are of the etalon and the frequency-related information of the reference light, where the correspondence is a correspondence between an optical frequency of an optical signal input into the etalon and the frequency-related information output from the etalon; and performing frequency offset correction on the initial spectrum based on the frequency of the reference light.

In an optional implementation, the correspondence includes a correspondence table or a correspondence function.

In an optional implementation, an action of emitting reference light may specifically include: sending reference light of different frequencies in different time periods. An action of obtaining frequency-related information of the reference light may specifically include: obtaining outputs of the etalon in the different time periods. Reference light and an etalon output in a same time period correspond to each other. An action of performing frequency offset correction on the initial spectrum based on the frequency-related information may specifically include: performing frequency offset correction on the initial spectrum based on the reference light and the etalon outputs that correspond to each other.

In an optional implementation, an action of performing frequency offset correction on the initial spectrum based on the frequency-related information may specifically include: performing frequency offset correction on the initial spectrum based on the frequency-related information, to obtain a first spectrum of the signal light; determining equal-interval frequency distribution of the first spectrum; and calculating, based on the first spectrum, a light intensity corresponding to each frequency in the equal-interval frequency distribution, to obtain the target spectrum.

According to a third aspect, an embodiment of this application provides a communication quality detection device. The communication quality detection device includes the spectrum detection device according to the first aspect. The communication quality detection device is further configured to receive signal light.

According to a fourth aspect, an embodiment of this application provides an optical communication network. The optical communication network includes the spectrum detection device according to the first aspect.

According to a fifth aspect, an embodiment of this application provides a computer-readable storage medium. The computer-readable storage medium stores a program. When executing the program, a computer performs the method according to the second aspect.

According to a sixth aspect, an embodiment of this application provides a computer program product. When the computer program product is executed on a computer, the computer performs the method according to the second aspect.

For beneficial effects of the second aspect to the sixth aspect, refer to the first aspect. Details are not described herein again.

### BRIEF DESCRIPTION OF DRAWINGS

FIG. 1 is a diagram of a structure of an optical communication network according to this application;
FIG. 2 is a diagram of a structure of an optical receiver according to this application;
FIG. 3 is a diagram of a structure of a spectrum detection device according to an embodiment of this application;
FIG. 4 is a diagram of a structure of a spectrum detection device including a storage unit according to an embodiment of this application;
FIG. 5 is a schematic flowchart of a spectrum detection method according to an embodiment of this application;
FIG. 6 is a diagram of frequency calibration according to an embodiment of this application;
FIG. 7 is a diagram of etalon calibration according to an embodiment of this application;
FIG. 8 is a schematic flowchart of a spectrum detection method according to an embodiment of this application;
FIG. 9 is a diagram of determining an actual frequency of reference light according to an embodiment of this application;
FIG. 10 is a diagram of frequency offset correction according to an embodiment of this application; and
FIG. 11 is a diagram of equal-interval distribution according to an embodiment of this application.

### DESCRIPTION OF EMBODIMENTS

The following describes embodiments of this application with reference to the accompanying drawings. A person of ordinary skill in the art may learn that, with development of technologies and emergence of a new scenario, technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a discrimination manner that is used when objects having a same attribute are described in embodiments of this application. In addition, the terms "include", "have", and any other variants thereof mean to cover nonexclusive inclusion, so that a process, method, system, product, or device that includes a series of units is not necessarily limited to those units, but may include other units not expressly listed or inherent to such a process, method, system, product, or device. In addition, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

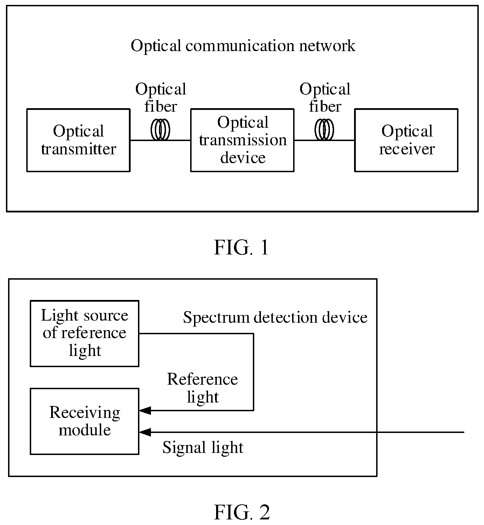

FIG. 1 is a diagram of a structure of an optical communication network. As shown in FIG. 1, the optical communication network includes an optical transmitter, an optical receiver, and an optical transmission device. The optical transmitter is configured to emit signal light, and the optical transmission device is configured to implement equalization, amplification, relay transmission, and the like of the signal light. An optical receiving device is configured to receive the signal light, and implement optical-to-electrical conversion of the signal light.

Optionally, the optical transmitter and the optical receiving device may be a line board, a tributary board, an optical line terminal (optical line terminal, OLT), or the like. This is not limited in this application. The optical transmission device may be an optical amplifier, a multiplexer/demultiplexer (for example, a reconfigurable optical add-drop multiplexer (reconfigurable optical add-drop multiplexer, ROADM) or a fixed optical add/drop multiplexer (fixed optical add/drop multiplexer, FOADM)), or the like. This is not limited in this application. In this application, the optical transmitter, the optical transmission device, and the optical receiving device may be connected through an optical fiber. Optionally, the optical fiber may be used as the optical transmission device. This is not limited in this application.

The optical communication network shown in FIG. 1 is configured to transmit the signal light, and transmission quality of the signal light may reflect signal transmission quality. Therefore, it is particularly important to obtain quality information such as a frequency and power of a transmitted signal. A common method is to obtain a spectrum of the transmitted signal based on a coherent spectrum detection technology, to determine the signal transmission quality.

As shown in FIG. 2, in the coherent spectrum detection technology, an optical receiver includes a light source of reference light and a receiving module. The light source of the reference light emits the reference light at a predetermined frequency. The receiving module may determine a spectrum of signal light based on a beat frequency signal between the signal light and the reference light, and a frequency of the reference light.

However, the frequency of the reference light actually emitted by the light source of the reference light is not necessarily the same as the predetermined frequency. As a result, in a process of determining the spectrum, the frequency of the reference light is inaccurate, and consequently, the spectrum is inaccurate.

To resolve the foregoing defect, embodiments of this application provide a spectrum detection device, a spectrum detection method, and a related device. In embodiments of this application, actual frequency information of a reference light is obtained via an etalon, and frequency offset correction is performed on a determined initial spectrum based on the actual frequency information, to obtain an accurate target spectrum.

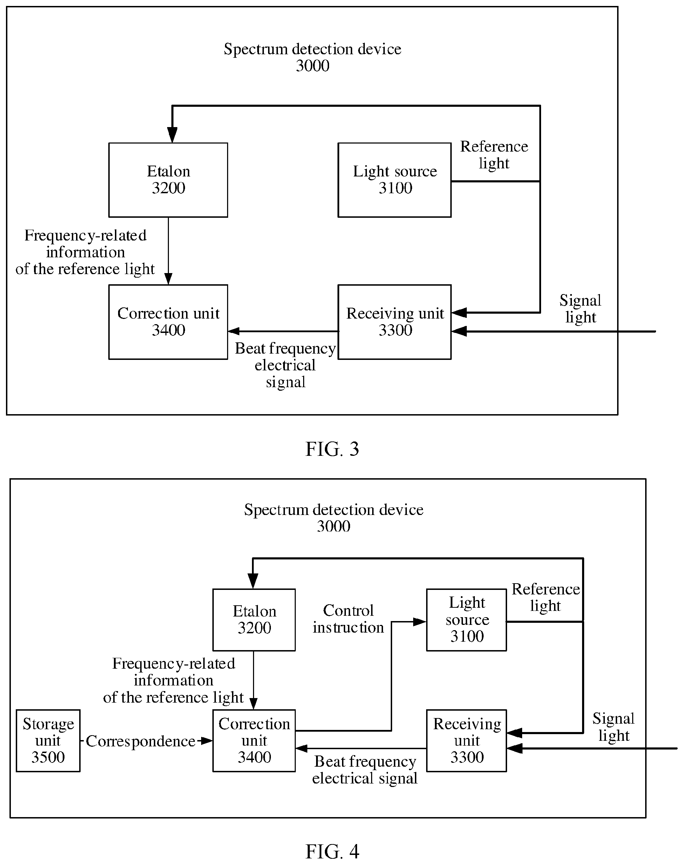

As shown in FIG. 3, a spectrum detection device 3000 provided in this embodiment of this application includes a light source 3100, an etalon 3200, a receiving unit 3300, and a correction unit 3400. The light source 3100 is configured to emit reference light, and the reference light may be transmitted to the etalon 3200 and the receiving unit 3300.

The etalon 3200 is configured to output frequency-related information of the reference light based on the input reference light. There is a correspondence between the frequency-related information and the reference light. In other words, when reference light of different frequencies is input into the etalon, different frequency-related information is output, and the frequency-related information may reflect an actual frequency of the reference light.

For example, the etalon 3200 may be an F-P cavity, and the frequency-related information may be output optical power of the F-P cavity. Then, the reference light of different frequencies is input into the etalon 3200, and emergent optical power corresponding to reference light of each frequency is output. The emergent optical power may reflect a frequency of the corresponding reference light. Therefore, the output optical power is a type of the frequency-related information.

The receiving unit 3300 is configured to: receive signal light, and obtain a beat frequency electrical signal between the reference light and the signal light. Specifically, the receiving unit 3300 may complete frequency mixing of the reference light and the signal light, and perform optical-to-electrical conversion, to obtain the beat frequency electrical signal between the reference light and the signal light.

The correction unit 3400 may obtain an initial spectrum of the signal light based on the beat frequency electrical signal; and perform frequency offset correction on the initial spectrum based on the frequency-related information of the reference light, to obtain a target spectrum of the signal light.

In embodiments of this application, the frequency-related information of the reference light is obtained via the etalon. Because the frequency-related information may reflect the actual frequency of the reference light, frequency offset correction is performed on the initial spectrum based on the frequency-related information, so that the corrected target spectrum can be accurate. In embodiments of this application, a requirement on the light source of the reference light can be further reduced when spectrum accuracy is ensured. Even if the frequency of the reference light output by the light source of the reference light is different from a predetermined frequency, the frequency offset correction may be performed on the spectrum based on the frequency-related information output by the etalon. Therefore, a precision requirement on the frequency of the reference light output by the light source can be reduced, and usage of a feedback structure on the light source, a high-precision light source, and the like are avoided. This can reduce structural complexity, design and manufacturing difficulty, and costs of the power supply, thereby reducing design and manufacturing difficulty and costs of the entire spectrum detection device.

Optionally, in this embodiment of this application, in addition to the F-P cavity, the etalon 3200 may alternatively be a grating, an optical thin film, a resonant cavity, an interferometer, or the like. This is not limited in this application.

Optionally, in this embodiment of this application, the frequency-related information output by the etalon 3200 may also be in different forms. For example, the frequency-related information may be a transmittance output by the etalon 3200, a reflectivity output by the etalon 3200, or output optical power, transmitted optical power, or reflected optical power of the etalon 3200. This is not limited in this application.

For example, if the frequency-related information is the transmittance output by the etalon 3200, when reference light of different frequencies is input, because the etalon has different transmittances for light of different wavelengths, the etalon 3200 may output different transmittances, and the transmittance may indicate a frequency of the reference light. A case in which the frequency-related information is the reflectivity output by the etalon 3200 is similar, and details are not described herein again.

For example, if the frequency-related information is the transmitted optical power of the etalon 3200, when reference light of different frequencies is input, because the etalon has different transmittances for light of different wavelengths, and optical power is different, the etalon 3200 may output different transmitted optical power, and the transmitted optical power may indicate a frequency of the reference light. A case in which the frequency-related information is the reflected optical power of the etalon 3200 is similar, and details are not described herein again.

In embodiments of this application, there is a correspondence between the frequency of the reference light and the frequency-related information. The correspondence may be a correspondence table, a correspondence function, or the like. This is not limited in this application.

Optionally, as shown in FIG. 4, the spectrum detection device 3000 may further include a storage unit 3500, and the storage unit 3500 is configured to store the foregoing correspondence. The correction unit 3400 may indicate the light source 3100 to emit reference light of different frequencies in different time periods, and perform frequency offset correction based on the correspondence stored in the storage unit 3500.

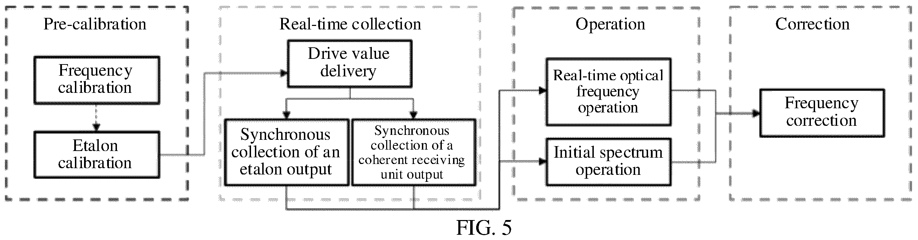

An accurate spectrum can be obtained via the spectrum detection device 3000 shown in FIG. 3 or FIG. 4. As shown in FIG. 5, a specific process of obtaining an accurate spectrum may be roughly divided into several stages: pre-calibration, real-time collection, operation, and correction.

The pre-calibration includes frequency calibration and etalon calibration. The frequency calibration is to calibrate a correspondence between a frequency of an input electrical signal of a light source 3100 and a frequency of output reference light. For example, a correction unit 3400 delivers a drive current C1, and after a frequency of the reference light output from the light source 3100 is stable, a frequency F1 of the reference light is detected. Then, the correction unit 3400 records a correspondence between C1 and F1 onto a storage unit 3500. By analogy, correspondences between drive currents C1 to Cn and frequencies F1 to Fn of the reference light may be recorded. C1 corresponds to F1, C2 corresponds to F2, ..., and Cn corresponds to Fn. Optionally, the correction unit 3400 may store a complete correspondence in the storage unit 3500 after obtaining the complete correspondence. This is not limited in this application.

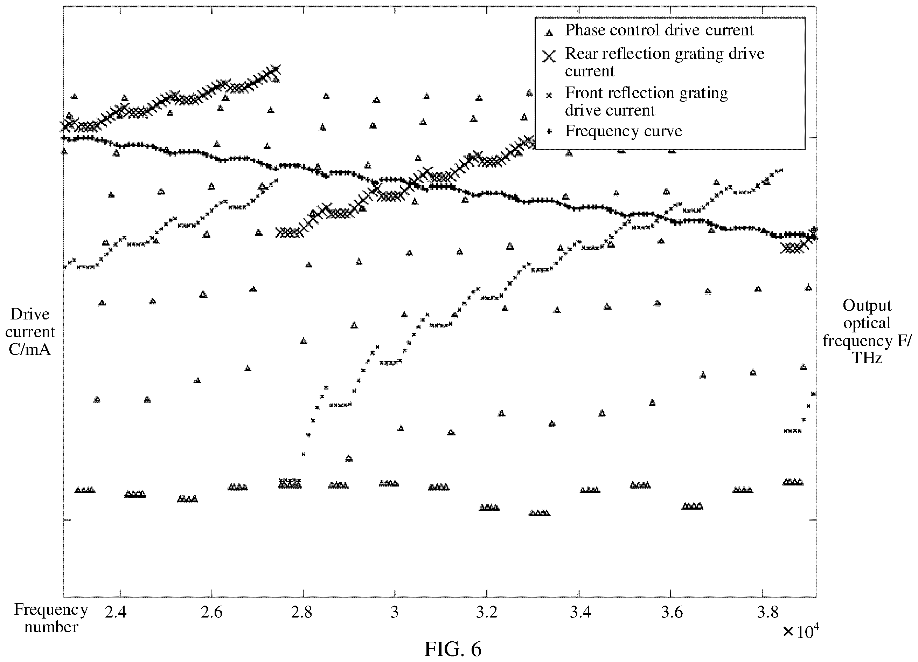

For example, as shown in FIG. 6, a horizontal coordinate is a frequency number, and represents different frequency; a left vertical coordinate is a drive current C, and may include, for example, a phase control current, a front reflection grating drive current, and a rear reflection grating drive current; and a right vertical coordinate is output optical power F corresponding to a drive current C of a frequency (frequency).

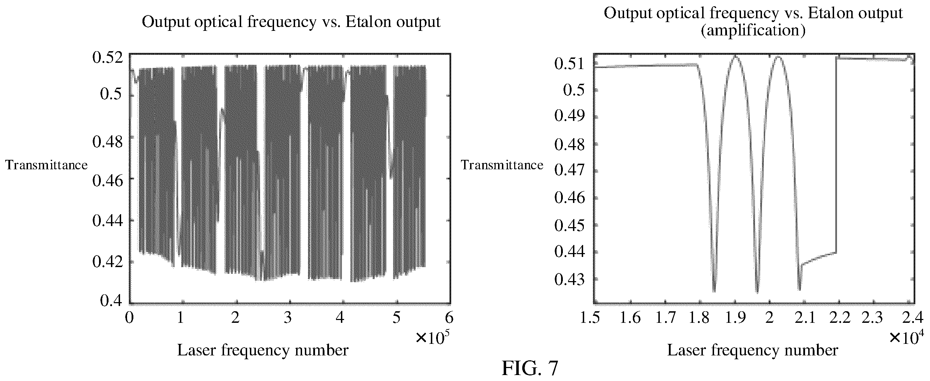

The etalon calibration is to calibrate a correspondence between a frequency of reference light input into an etalon 3200 and frequency-related information output from the etalon 3200. For example, reference light of a frequency F1 is input to the etalon 3200, and corresponding frequency-related information E1 may be determined after an output of the etalon 3200 is stable. Then, a correction unit 3400 records a correspondence between E1 and F1 onto a storage unit 3500. By analogy, correspondences between frequencies F1 to Fn of the reference light and frequency-related information E1 to En may be recorded. E1 corresponds to F1, E2 corresponds to F2, ..., and En corresponds to Fn. For example, as shown in FIG. 7, a horizontal coordinate is a frequency number, and a vertical coordinate is an etalon output E. Optionally, E and F that correspond to each other may be determined based on the frequency number. For example, both F1 and E1 correspond to a same frequency number.

Optionally, the foregoing correspondence may be shown in Table 1, and is recorded in a table. The table is stored in the storage unit 3500. Output optical power in Table 1 is output optical power of the light source 3100, and the etalon output is the frequency-related information output by the etalon 3200.

**Table 1 Correspondence between a drive current C, a reference optical frequency F, and frequency-related information E**

| Correspondence table | | | |
|---|---|---|---|
| Frequency number | Drive current | Output optical frequency | Etalon output |
| 1 | C1 | F1 | E1 |
| 2 | C2 | F2 | E2 |
| ... | ... | ... | ... |
| N | Cn | Fn | En |

Optionally, the output optical power in Table 1 is a plurality of frequencys in a spectrum frequency range. Output optical power F1 to Fn corresponding to frequencies 1 to n may monotonically increase or monotonically decrease, so that the driven current is subsequently changed based on the frequencies, to obtain an initial spectrum and a target spectrum.

Optionally, in embodiments of this application, in addition to recording the correspondence between the drive current C, the output optical power F, and the etalon output E in a table, the correspondence may alternatively be recorded in another manner, for example, a correspondence function. This is not limited in this application.

For example, the etalon 3200 may be an F-P cavity, and E1 to En may be output optical power of the etalon 3200.

Optionally, in a pre-calibration process, a detection device may be inserted between the light source 3100 and the etalon 3200 to detect the frequency of the reference light output from the light source 3100 (namely, the frequency of the input reference light of the etalon 3200). Optionally, the detection device may be a wavelength meter, a spectrometer, or the like. This is not limited in this application.

Optionally, the pre-calibration may be completed before a spectrum detection device is delivered from a factory, and a pre-calibration result (namely, the correspondence table or the correspondence function) is stored in the storage unit 3500 for subsequent invocation.

The real-time collection includes drive value delivery, synchronous collection of an etalon output, and synchronous collection of a coherent receiving unit output. In other words, the correction unit 3400 delivers a driving value to the light source 3100, and synchronously collects the frequency-related information output from the etalon 3200 and a beat frequency electrical signal output from a receiving unit 3300.

The operation includes a real-time optical frequency operation and an initial spectrum operation. The real-time optical frequency operation is determining the corresponding frequency F of the reference light based on the frequency-related information E output from the etalon. The initial spectrum operation is determining the initial spectrum based on the beat frequency electrical signal.

The correction includes frequency correction, in other words, frequency offset correction is performed on the initial spectrum based on the frequency F, of the reference light, determined in a real-time optical frequency operation process, to obtain an accurate target spectrum.

In the foregoing real-time collection phase, delivery of the drive value, collection of the etalon output, and collection of the receiving unit output are synchronously performed. The initial spectrum and frequency-related information corresponding to the initial spectrum can be obtained by delivering different drive values in different time periods.

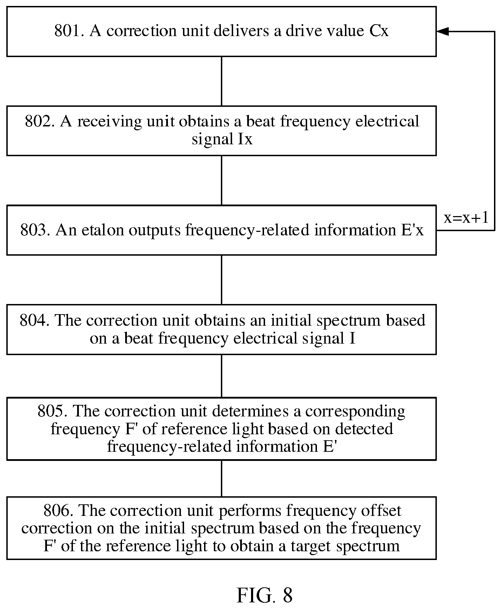

As shown in FIG. 8, a spectrum detection method provided in this embodiment of this application includes the following steps.

801. A correction unit delivers a drive value Cx.

The correction unit 3400 may obtain the drive current from a correspondence table stored in a storage unit 3500, and deliver the drive current Cx to a light source 3100. For example, the correction unit 3400 may select the frequency 1 in Table 1, and deliver a corresponding drive current C1 to the light source 3100, so that the light source 3100 emits reference light corresponding to C1.

802. A receiving unit obtains a beat frequency electrical signal Ix.

The receiving unit 3300 may receive signal light and reference light corresponding to the drive current Cx, and obtain the beat frequency electrical signal Ix based on the signal light and the reference light corresponding to the Cx. For example, the receiving unit 3300 may obtain a beat frequency electrical signal I1 based on the signal light and reference light corresponding to C1.

803. An etalon outputs frequency-related information E'x.

After the reference light corresponding to Cx is input to the etalon 3200, the corresponding frequency-related information E'x is output, where E'x corresponds to the reference light corresponding to Cx. For example, after the reference light corresponding to C1 is input to the etalon 3200, corresponding E'1 may be output.

Because the light source 3100 has a slow response speed, aging, non-linearity, and the like, a frequency of reference light emitted by the light source 3100 based on the delivered drive current Cx is not necessarily the same as a predetermined frequency Fx. For example, the drive current C1 is delivered to the light source 3100, and the frequency of the reference light emitted by the light source 3100 is not necessarily F1. It is assumed that an actual frequency of the reference light emitted by the light source 3100 based on the drive current Cx is F'x. The reference light is input into the etalon 3200, and output frequency-related information is E'x, where E'x corresponds to the reference light whose frequency is F'x, in other words, corresponds to the actual frequency of the reference light.

Then, the correction unit 3400 changes a drive current C, and continues to perform steps 801 to 803, to detect a next frequency in a spectrum frequency range. This is repeated until all frequencys in the spectrum frequency range are detected.

For example, the correction unit may deliver the drive current C1 to the light source 3100 in a first time period, and then obtain a drive current C2, corresponding to a next frequency, from Table 1 after performing 801 to 803, in other words, after obtaining the beat frequency electrical signal I1 and the frequency-related information E'1. Then, steps 801 to 803 continue to be performed to obtain a beat frequency electrical signal I2 and frequency-related information E'2. This is repeated until beat frequency electrical signals I1 to In corresponding to all frequencies in Table 1 and actual outputs E'1 to E'n of the etalon are obtained.

Step 801 to step 803 correspond to the real-time collection in the foregoing embodiment, namely, a process of delivery of the drive value, synchronous collection of the etalon output, and synchronous collection of the coherent receiving unit output.

804. The correction unit obtains an initial spectrum based on a beat frequency electrical signal I.

After I1 to In are obtained, the correction unit 3400 may obtain the initial spectrum of the signal light through calculation based on I1 to In and a predetermined output light frequency. For example, in steps 801 to 803, C1 to Cn in Table 1 are delivered to the light source 3100 in different time periods, to obtain I1 to In respectively corresponding to C1 to Cn. In step 804, I1 is calculated based on an output optical frequency F1 corresponding to C1, to obtain optical power P1 corresponding to F1; I2 is calculated based on an output optical frequency F2 corresponding to C2, to obtain optical power P2 corresponding to F2; and so on. In this way, optical power distribution of the signal light at different frequencies is obtained, to obtain the initial spectrum.

805. The correction unit determines a corresponding frequency F' of the reference light based on detected frequency-related information E'.

In step 803, the frequency-related information E' obtained by the correction unit 3400 corresponds to the actual frequency F' of the reference light. Therefore, the correction unit may obtain the corresponding frequency F' of the reference light based on the frequency-related information E'.

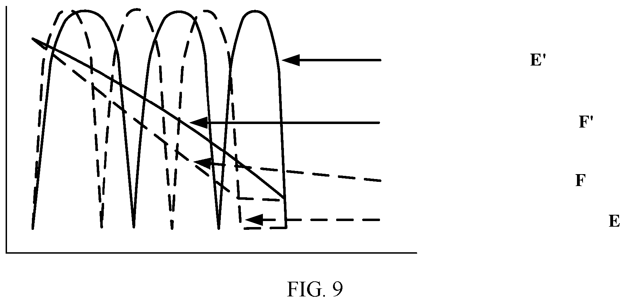

For example, as shown in FIG. 9, a horizontal coordinate is a frequency number, a left vertical coordinate is sizes of E and E', and a right vertical coordinate is sizes of F and F'. The correction unit 3400 may calculate, based on a correspondence that is between E and F and that is stored in a wavelength table (namely, the foregoing Table 1), the real-time optical frequency F' corresponding to the real-time output E' of the etalon.

Step 804 and step 805 correspond to the operation in the foregoing embodiment, namely, a process of a real-time optical frequency operation and an initial spectrum operation.

806. The correction unit performs frequency offset correction on the initial spectrum based on the frequency F' of the reference light to obtain a target spectrum.

In step 804, the obtained initial spectrum is optical power distribution of the signal light at different Fx. The light frequency in the distribution is inaccurate due to a slow response speed, aging, non-linearity, and the like of the light source 3100. In step 805, the correction unit 3400 obtains, based on the frequency-related information E' output from the etalon 3200, the actual output optical power F' corresponding to each output optical power F. Then, frequency offset correction may be performed on the initial spectrum based on F', to obtain an accurate target spectrum.

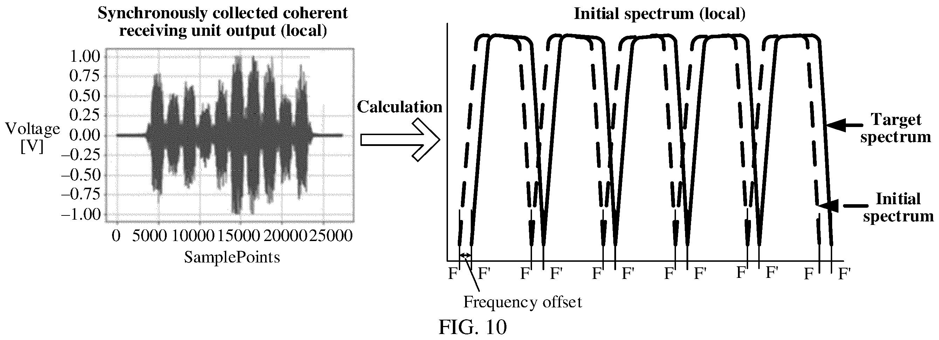

For example, as shown in FIG. 10, the correction unit 3400 may obtain the initial spectrum through calculation based on an output of the coherent receiving unit (namely, the receiving unit 3300). Then, the correction unit 3400 replaces F in the initial spectrum with F', to implement frequency offset correction and obtain the accurate target spectrum.

Optionally, if F' obtained in step 805 is not distributed at equal intervals, a spectrum obtained by the correction unit 3400 by performing frequency offset correction on the initial spectrum may be referred to as a first spectrum. The correction unit 3400 may determine equal-interval frequency distribution of a first spectrum, and calculate, based on the first spectrum, a light intensity corresponding to each frequency in the equal-interval frequency distribution, to obtain the target spectrum.

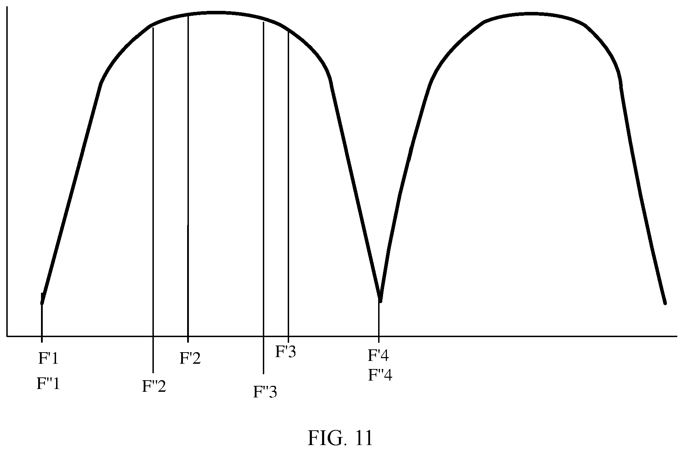

For example, as shown in FIG. 11, in the first spectrum, if points F'1 to F'4 are not distributed at equal intervals, the correction unit 3400 may determine points F" 1 to F"4 that are distributed at equal intervals, and obtain optical power corresponding to the points F" 1 to F"4 by performing difference calculation on the first spectrum, to obtain the target spectrum by using F" 1 to F"4 as horizontal coordinates and using the power corresponding to the points F" 1 to F"4 as vertical coordinates.

Step 806 corresponds to the correction in the foregoing embodiment, namely, a process of frequency offset correction.

According to the spectrum detection device 3000 and the spectrum detection method provided in embodiments of this application, frequency and power information of the signal light may be determined. Optionally, in embodiments of this application, other quality information, for example, bandwidth, a frequency offset (a deviation that is between a predetermined frequency and an actual transmission frequency and that is caused by a channel or the like), and an optical signal-to-noise ratio (optical signal-to-noise ratio, OSNR), of the signal light may be further calculated based on the frequency and the power information of the signal light. This is not limited in this application. Optionally, if a target spectrum with equal interval distribution shown in FIG. 11 is used as a basis, the foregoing other quality information (such as the OSNR and the bandwidth) may be conveniently obtained through calculation.

Optionally, an embodiment of this application further provides a communication quality detection device. The communication quality detection device includes the spectrum detection device 3000 in the foregoing embodiments. The spectrum detection device 3000 may further receive signal light. Specifically, the receiving unit 3300 in the spectrum detection device 3000 is further configured to receive the signal light.

Optionally, the communication quality detection device may calculate other quality information, for example, bandwidth, a frequency offset (a deviation that is between a predetermined frequency and an actual transmission frequency and that is caused by a channel or the like), and an optical signal-to-noise ratio OSNR, of the signal light based on a spectrum obtained by the spectrum detection device 3000. This is not limited in this application.

Optionally, the communication quality detection device may be an optical performance monitoring module (optical performance monitor, OPM), an optical channel monitoring module (optical channel monitor, OCM), or the like. This is not limited in this application.

Optionally, the communication quality detection device may be an independent device, or may be integrated with an optical transmitter, an optical transmission device, an optical receiver, or the like. This is not limited in this application.

For example, the communication quality detection device may be a board on a device, for example, an optical line terminal (optical line terminal, OLT), a reconfigurable optical add-drop multiplexer (reconfigurable optical add-drop multiplexer, ROADM) station, an equalization station, or an optical switching station (optical switch), and is configured to implement spectrum detection of the signal light, to obtain communication quality information (such as the frequency, the bandwidth, and the OSNR) of the signal light. This is not limited in this application.

Optionally, an embodiment of this application further provides an optical communication network. The optical communication network includes the spectrum detection device 3000.

Optionally, the spectrum detection device 3000 may be an independent device in the optical communication network, or may exist in a communication quality detection device in the optical communication network. This is not limited in this application.

Optionally, an architecture of the optical communication network may be shown in FIG. 1. The spectrum detection device 3000 may be an independent device in a network, or may be integrated into a device, for example, an optical transmitter, a receiver, or a transmission device. This is not limited in this application.

It may be clearly understood by a person skilled in the art that, for the purpose of convenient and brief description, for a detailed working process of the foregoing system, apparatuses, and units, refer to a corresponding process in the foregoing method embodiments, and details are not described herein again.

In the several embodiments provided in this application, it should be understood that the disclosed system, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each unit may exist independently physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a current technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

## Claims

1. A spectrum detection device, comprising:
a light source, configured to emit reference light;
an etalon, configured to output frequency-related information of the reference light based on the input reference light, wherein the reference light and the frequency-related information correspond to each other;
a receiving unit, configured to obtain a beat frequency electrical signal between the reference light and signal light, wherein the beat frequency electrical signal is for obtaining an initial spectrum of the signal light; and
a calculation unit, configured to perform frequency offset correction on the initial spectrum based on the frequency-related information, to obtain a target spectrum of the signal light.

2. The device according to claim 1, wherein the frequency-related information comprises at least one of the following:
output optical power of the etalon;
a transmittance output by the etalon;
a reflectivity output by the etalon;
transmitted optical power of the etalon; or
reflected optical power of the etalon.

3. The device according to claim 1 or 2, wherein the etalon comprises at least one of the following:
a Fabry-Perot F-P cavity, a grating, an optical thin film, a resonant cavity, and an interferometer.

4. The device according to any one of claims 1 to 3, wherein the calculation unit is specifically configured to:
determine a frequency of the reference light based on a correspondence between an input and an output that are of the etalon and the frequency-related information of the reference light, wherein
the correspondence is a correspondence between an optical frequency of an optical signal input into the etalon and the frequency-related information output from the etalon.

5. The device according to claim 4, wherein the correspondence comprises a correspondence table or a correspondence function.

6. The device according to any one of claims 1 to 5, wherein the calculation unit is specifically configured to:
control the light source to send reference light of different frequencies in different time periods;
obtain outputs of the etalon in the different time periods, wherein reference light and an etalon output in a same time period correspond to each other; and
perform frequency offset correction on the initial spectrum based on the reference light and the etalon outputs that correspond to each other.

7. The device according to any one of claims 1 to 6, wherein the calculation unit is specifically configured to:
perform frequency offset correction on the initial spectrum based on the frequency-related information, to obtain a first spectrum of the signal light;
determine equal-interval frequency distribution of the first spectrum; and
calculate, based on the first spectrum, a light intensity corresponding to each frequency in the equal-interval frequency distribution, to obtain the target spectrum.

8. A spectrum detection method, comprising:
emitting reference light;
obtaining frequency-related information of the reference light, wherein the frequency-related information is obtained by inputting the reference light into an etalon, and the reference light and the frequency-related information correspond to each other;
obtaining a beat frequency electrical signal between the reference light and signal light, wherein the beat frequency electrical signal is for obtaining an initial spectrum of the signal light; and
performing frequency offset correction on the initial spectrum based on the frequency-related information, to obtain a target spectrum of the signal light.

9. The method according to claim 8, wherein the frequency-related information comprises at least one of the following:
output optical power of the etalon;
a transmittance output by the etalon;
a reflectivity output by the etalon;
transmitted optical power of the etalon; or
reflected optical power of the etalon.

10. The method according to claim 8 or 9, wherein the etalon comprises at least one of the following:
a Fabry-Perot F-P cavity, a grating, an optical thin film, a resonant cavity, and an interferometer.

11. The method according to any one of claims 8 to 10, wherein the performing frequency offset correction on the initial spectrum based on the frequency-related information comprises:
determining a frequency of the reference light based on a correspondence between an input and an output that are of the etalon and the frequency-related information of the reference light, wherein the correspondence is a correspondence between an optical frequency of an optical signal input into the etalon and the frequency-related information output from the etalon; and
performing frequency offset correction on the initial spectrum based on the frequency of the reference light.

12. The method according to claim 11, wherein the correspondence comprises a correspondence table or a correspondence function.

13. The method according to any one of claims 8 to 12, wherein the emitting reference light comprises: sending reference light of different frequencies in different time periods;
the obtaining frequency-related information of the reference light comprises: obtaining outputs of the etalon in the different time periods, wherein reference light and an etalon output in a same time period correspond to each other; and
the performing frequency offset correction on the initial spectrum based on the frequency-related information comprises:
performing frequency offset correction on the initial spectrum based on the reference light and the etalon outputs that correspond to each other.

14. The method according to any one of claims 8 to 13, wherein the performing frequency offset correction on the initial spectrum based on the frequency-related information comprises:
performing frequency offset correction on the initial spectrum based on the frequency-related information, to obtain a first spectrum of the signal light;
determining equal-interval frequency distribution of the first spectrum; and
calculating, based on the first spectrum, a light intensity corresponding to each frequency in the equal-interval frequency distribution, to obtain the target spectrum.

15. A communication quality detection device, comprising the spectrum detection device according to any one of claims 1 to 7, wherein an optical communication device is further configured to receive signal light.

16. A computer-readable storage medium, wherein the computer-readable storage medium stores a program; and when a computer executes the program, the method according to any one of claims 8 to 14 is performed.

17. A computer program product, wherein when the computer program product is executed on a computer, the computer performs the method according to any one of claims 8 to 14.
